# EUROPEAN PATENT SPECIFICATION

(11) **EP 0 434 419 B1**
(45) Date of publication and mention of the grant of the patent: **02.11.1994**
(21) Application number: 90313992.1
(22) Date of filing: 20.12.1990
(51) Int. Cl.: F02G 5/02, F01K 23/06

(54) **Method and apparatus for effecting heat energy recovery in a large diesel engine**
Methode und Vorrichtung zur Hitzeenergie-Rückgewinnung in einem grossen Dieselmotor
Méthode et dispositif pour la récupération d'énergie calorifique dans un grand moteur diesel

(30) Priority: 21.12.1989 FI 896158
(43) Date of publication of application: 26.06.1991
(73) Proprietor: Oy Wärtsilä Diesel International Ltd., 00530 Helsinki (FI)
(72) Inventor: Ahnger, Anders, SF-65100 Vaasa (FI)
(74) Representative: Newby, John Ross

(56) References cited:
- DE-C- 657 608
- US-A- 4 520 628
- US-A- 4 901 531
- PATENT ABSTRACTS OF JAPAN vol. 11, no. 175 (M-596)(2622) 05 June 1987,& JP-A-62 7905 (MITSUBISHI HEAVY IND.) 14 January 1987
- PATENT ABSTRACTS OF JAPAN vol. 7, no. 261 (M-257)(1406) 19 November 1983,& JP-A-58 143114 (MITSUBISHI JUKOGYO) 25 August 1983
- SCHIFF UND HAFEN. vol. 32, no. 4, April 1980, HAMBURG DE pages 71 - 72; "Gewinnung elektrischer Energie aus der Abgaswärme von Dieselmotoren"
- PATENT ABSTRACTS OF JAPAN vol. 9, no. 121 (M-382)(1844) 25 May 1985,& JP-A-60 6014 (MITSUI ZOSEN) 12 January 1985

## Description

The invention relates to an improved method for recovering heat energy from the exhaust gases of a large diesel engine provided with a turbocharger and to apparatus for implementing the method.

The term "large diesel engine" as used herein refers to a diesel engine of such a size that it is applicable for use in a diesel power plant or as a ship's engine. Typically a "large diesel engine" will have an output rating above 1 MW, even 20 MW or more. With an engine of this size it is often desirable to make use of the waste heat, or so-called secondary energy, generated by the engine in addition to the mechanical energy created by the engine. For this purpose an exhaust gas boiler for recovering heat energy is generally connected to the exhaust pipe of the engine immediately downstream of the turbocharger. The temperature of the exhaust gases of a modern diesel engine, however, is relatively low and a further decrease in temperature takes place due to the work performed by the exhaust gases in passing through the turbocharger. Due to this, a relatively large heat exchange surface is required in the exhaust gas boiler in relation to the heat energy to be recovered therewith. This results in an increase in size of the exhaust gas boiler and a greater cost for the investment in energy-recovery equipment. When making use of the recovered heat energy for steam production, the relatively low temperatures limit the pressures for the generated steam to a range extending from about 4 to about 16 bar, pressures which correspond to about 143 to 201°C for the saturated steam created in the exhaust gas boiler.

An aim of the invention is to create an improved solution for recovering and making use of the heat energy from the exhaust gases of a large diesel engine especially in heating power plant applications and in steam production, so that the efficiency of the recovery of secondary energy is improved, without incurring the drawbacks and disadvantages apparent in prior art solutions. More specifically the aim of the invention is to improve the total efficiency ratio of a power plant based on the use of a large diesel engine.

What constitutes the invention in its method aspect is defined in the following claim 1 and in its apparatus aspect in claim 3, the pre-characterising clause of each claim acknowledging the disclosure of JP-A-627905.

The basic perception underlying the invention is the fact that when an engine is operated under high load and/or speed, the exhaust gases include, in addition to the energy needed to power the turbocharger, surplus energy, which can be extracted without noticeable effect on the operational efficiency of the turbocharger. Thus, in accordance with the invention part of the heat energy contained in the exhaust gases of the engine is extracted upstream of the turbocharger and at least a major part of this recovered heat energy is used for producing usable secondary energy independent of the production of mechanical energy by the engine. In practice this is arranged by leading the exhaust gases of the engine first into an exhaust gas boiler and only thereafter into the turbocharger. By this means, for example, in steam production it is possible to generate pressures up to about 35 bar, a pressure which corresponds to about 240 to 250°C for the saturated steam, whereby the efficiency ratio for steam production, and thus for the overall extraction of energy from the used diesel fuel, can essentially be improved by means of the invention.

The recovery of heat energy from the exhaust gases in accordance with this invention takes place however in two phases, one part extracted before leading the exhaust gases into the turbocharger and a further part after the exhaust gases have left the turbocharger. At lower engine loads, especially below a loading of 85% of the maximum, recovery of heat energy from the exhaust gases before leading them into the turbocharger is reduced by leading a proportion of the exhaust gases directly into the turbocharger bypassing the upstream heat exchanger. In this way it is possible to ensure that enough input air is available for the needs of the combustion process of the engine and thus for the efficient working of the engine to generate mechanical power.

The invention will now be further described, by way of example, with reference to the accompanying drawing, in which:
Figure 1 shows schematically a prior art solution for recovering heat from the exhaust gases of a large diesel engine, and
Figure 2 shows schematically apparatus according to the invention for the same purpose.

In both Figures of the drawing the reference numeral 1 indicates part of a large diesel engine provided with several cylinders and with an exhaust pipe 2. A turbocharger 3 is attached to the exhaust pipe 2 for feeding air under pressure into the cylinders of the engine via an inlet duct 4. For recovering heat energy from the exhaust gases, they are led through an exhaust gas boiler 5. In the arrangements shown in both Figures a steam generator 6 is connected to the exhaust gas boiler 5. Water is fed into the generator 6 via a duct 7, and in the conventional case, the generated steam is led to its location of use directly via a duct 8. Ducts 13 (drawn in dashed line) indicate an alternative arrangement for producing super-heated steam, whereby the saturated steam from the steam generator 6 is first led into a superheater part in the boiler 5 before leading to the location of use. When necessary, a part of, or all, the exhaust gases can be led past the exhaust gas boiler 5 by means of a by-pass valve 9.

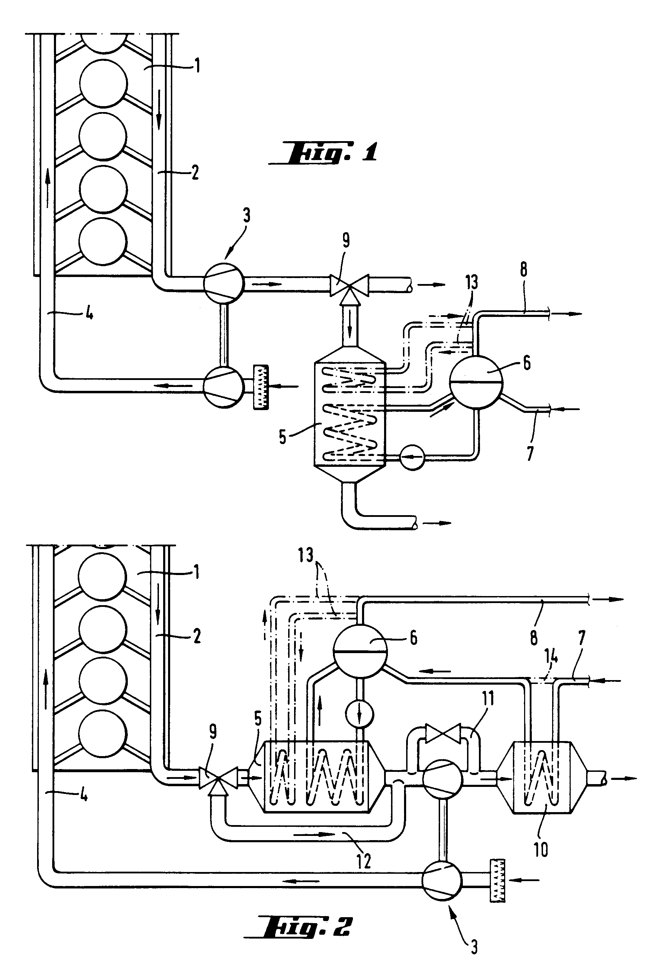

The solution according to the invention shown in Figure 2 includes additionally a second exhaust gas boiler 10, a so-called economizer, in which the water to be fed into the steam generator 6 can be preheated. A duct 14 drawn in dashed lines represents an alternative path for inlet water in the case where the economizer 10 is not needed or not being used. In addition Figure 2 also shows a by-pass 11 for the turbocharger 3.

With reference to Figure 2, part of the heat energy in the exhaust gases is recovered by means of an exhaust gas boiler 5 which is now located upstream of the turbocharger 3. In this case, the temperature of the exhaust gases fed into the exhaust gas boiler 5 is around 150 to 180°C higher in comparison with the case shown in Figure 1, and in addition the pressure of the exhaust gases is higher. As a result thereof, heat transfer between the exhaust gases and the heat exchanger pipes in the boiler 5 is essentially more efficient, whereby smaller heat exchange surfaces are needed for the same heat capacity than in a conventional exhaust gas boiler.

An additional advantage of the arrangement according to the invention and shown in Figure 2, is the fact that it makes it possible to provide higher steam pressures than before through the more effective use of the recovered heat energy. Thus so-called superheated steam, which is more easily used in the following industrial processes, is obtained. Thus, for instance, in a steam turbine connected to the boiler 5 of Figure 2, a better mechanical efficiency ratio is achieved for the turbine, as a result of which the total energy efficiency of a diesel heating power plant and especially the efficiency ratio for the production of electricity becomes enhanced.

On the other hand, in the solution according to the invention shown in Figure 2, the temperature and pressure of the exhaust gases to be fed to the turbocharger 3 are lower in comparison with the case shown in Figure 1, because the feeding now takes place downstream of the exhaust gas boiler 5. Thus the power available for the turbocharger is less and this needs to be taken into account when deciding on the size of the turbocharger. In spite of this, the turbocharger 3 is normally able to feed sufficient charge air into the engine when the engine is operating under heavy loads. However, in the event that the waste heat recovery is being used, the engine is loaded for mechanical purposes and the engine is operated for instance at below 85% of the rated output thereof, part of the exhaust gases is ducted past the exhaust gas boiler 5 by means of the by-pass valve 9 and a by-pass duct 12 and fed directly into the turbocharger 3. In this way sufficient provision of charge air for the engine is ensured for all operating conditions. Clearly, the by-pass valve 9 and the duct 12 can also be used, for instance, when the exhaust gas boiler 5 needs cleaning or is defective.

## Claims

1. A method for effecting recovery and utilization of heat energy from the exhaust gases of a large diesel engine (1) used to generate mechanical energy which engine is provided with a turbocharger (3), at least part of the heat energy contained in the exhaust gases of the engine (1) being recovered and used for producing secondary energy to be used independently of the production of the mechanical energy by the engine, the recovery of the heat energy from the exhaust gases taking place at least in two phases one before leading the gases into the turbocharger (3) for hot water or steam production, and one after the exhaust gases have passed through the turbocharger (3) for preheating supply water for said hot water or steam production, characterised in that at engine loads less than the maximum, recovery of the heat energy from the exhaust gases before leading them into the turbocharger (3) is decreased by bypassing a proportion of the exhaust gases directly into the turbocharger (3).

2. A method according to claim 1, characterized in that bypassing a proportion of the exhaust gases directly into the turbocharger (3) occurs when the engine (1) is operated at below 85% of the rated output thereof.

3. Apparatus including a large diesel engine (1) provided with a turbocharger (3) and means to lead at least a proportion of the exhaust gases of the engine into a first exhaust gas boiler (5) and thereafter into the turbocharger (3), a hot water or steam generator (6) being connected to the heat exchange circuit of the first exhaust gas boiler (5), and downstream of the turbocharger (3) the exhaust gases being led into a second exhaust gas boiler (10) arranged for preheating supply water to be led into said generator (6), characterised in that a by-pass duct (12) is provided for leading exhaust gases past said first exhaust gas boiler (5) directly into the turbocharger (3) and in that a by-pass valve (9) is provided to feed a greater proportion of the exhaust gases through said by-pass duct (12) at engine loads less than the maximum rated engine output, especially below 85% of the maximum rated engine output.

## Patentansprüche

1. Verfahren zur Rückgewinnung und Nutzung von Wärmeenergie aus den Abgasen eines großen Dieselmotors (1), der zum Erzeugen mechanischer Energie benutzt wird und mit einem Turbolader (3) versehen ist, wobei mindestens ein Teil der in den Abgasen des Motors (1) enthaltenen Wärmeenergie rückgewonnen und zum Erzeugen von Sekundärenergie zur Verwendung unabhängig von der Erzeugung der mechanischen Energie mittels des Motors benutzt wird, wobei die Rückgewinnung der Wärmeenergie aus den Abgasen mindestens in zwei Phasen erfolgt, eine vor dem Einleiten der Gase in den Turbolader (3) zur Erzeugung von Heißwasser oder Dampf, und eine nach dem Durchlauf der Abgase durch den Turbolader (3) zur Vorerwärmung von Zufuhrwasser für die Erzeugung von Heißwasser oder Dampf, dadurch gekennzeichnet, daß bei Motorlasten unterhalb des Maximums die Wiedergewinnung der Wärmeenergie aus den Abgasen vor deren Einleiten in den Turbolader (3) dadurch verringert wird, daß ein Anteil der Abgase unmittelbar in den Turbolader (3) umgeleitet wird.

2. Verfahren nach Anspruch 1, dadurch gekennzeichnet, daß die Umleitung eines Anteils der Abgase unmittelbar in den Turbolader (3) erfolgt, wenn der Motor (1) bei unterhalb 85 % seiner Solleistung betrieben wird.

3. Vorrichtung mit einem großen Dieselmotor (1), der mit einem Turbolader (3) sowie mit Einrichtungen versehen ist, um mindestens einen Anteil der Abgase des Motors in einen ersten Abgaskessel (5) und danach in den Turbolader (3) zu leiten, wobei ein Heißwasser- oder Dampferzeuger (6) mit dem Wärmeaustauschkreis des ersten Abgaskessels (5) verbunden ist und stromabwärts vom Turbolader (3) die Abgase in einen zweiten Abgaskessel (10) geleitet werden, der so angeordnet ist, daß er Zufuhrwasser vorerwärmt, welches in den Erzeuger (6) geleitet werden soll, dadurch gekennzeichnet, daß eine Umgehungsleitung (12) vorgesehen ist, um Abgase am ersten Abgaskessel (5) vorbei unmittelbar in den Turbolader (3) zu leiten, und daß ein Umgehungsventil (9) vorgesehen ist, um einen größeren Anteil der Abgase bei Motorlasten unterhalb der maximalen Solleistung des Motors, insbesondere unterhalb 85 % der maximalen Solleistung des Motors durch die Umgehungsleitung (12) zuzuführen.

## Revendications

1. Un procédé destiné à effectuer une récupération et une utilisation de l'énergie thermique des gaz d'échappement d'un gros moteur diesel (1) utilisé pour la génération d'énergie mécanique, moteur qui comprend un turbocompresseur (3) à suralimentation, au moins une partie de l'énergie thermique contenue dans les gaz d'échappement du moteur (1) étant récupérée et utilisée pour produire une énergie secondaire à utiliser indépendamment de la production de l'énergie mécanique par le moteur, la récupération de l'énergie thermique à partir des gaz d'échappement s'effectuant au moins en deux phases, l'une avant d'amener les gaz dans le turbocompresseur (3) à suralimentation pour la production d'eau chaude ou de vapeur, et l'autre après le passage des gaz d'échappement à travers le turbocompresseur (3) à suralimentation pour préchauffer l'eau d'alimentation de ladite production d'eau chaude ou de vapeur, caractérisé en ce que la récupération de l'énergie thermique à partir des gaz d'échappement avant leur amenée dans le turbocompresseur (3) à suralimentation est diminuée, à des charges du moteur inférieures à la charge maximale, en dérivant directement une partie des gaz d'échappement vers le turbocompresseur (3) à suralimentation.

2. Un procédé selon la revendication 1, caractérisé en ce que la dérivation d'une proportion des gaz d'échappement directement dans le turbocompresseur (3) à suralimentation se produit lorsque le moteur (1) fonctionne à une puissance inférieure à 85 % de sa puissance nominale.

3. Appareil incluant un gros moteur diesel (1) pourvu d'un turbocompresseur (3) à suralimentation et de moyens de conduire au moins une partie des gaz d'échappement du moteur vers une première chaudière (5) à gaz d'échappement et ensuite dans le turbocompresseur (3) à suralimentation, un générateur (6) d'eau chaude ou de vapeur étant relié au circuit d'échange thermique de la première chaudière (5) à gaz d'échappement, et les gaz d'échappement étant amenés en aval du turbocompresseur à suralimentation vers une deuxième chaudière (10) à gaz d'échappement agencée de manière à préchauffer l'eau d'alimentation à conduire vers ledit générateur (6), caractérisé en ce qu'une conduite de dérivation (12) est disposée de façon à conduire des gaz d'échappement en évitant ladite chaudière (5) à gaz d'échappement directement vers le turbocompresseur (3) à suralimentation et en ce qu'une valve de dérivation (9) est disposée de façon à envoyer une plus grande proportion des gaz d'échappement à travers ladite conduite de dérivation (12) pour des charges de moteur inférieures à la puissance maximale nominale du moteur, spécialement des charges inférieures à 85 % de la puissance maximale nominale du moteur.
